# EUROPÄISCHE PATENTSCHRIFT

(11) **EP 1 135 620 B1**
(45) Veröffentlichungstag und Bekanntmachung des Hinweises auf die Patenterteilung: **26.02.2003**
(21) Anmeldenummer: 99959319.7
(22) Anmeldetag: 24.11.1999
(51) Int. Cl.: F16B 25/00

(54) **SCHRAUBE, INSBESONDERE BETONSCHRAUBE**
SCREW, ESPECIALLY A CONCRETE SCREW
VIS, EN PARTICULIER VIS POUR BETON

(30) Priorität: 08.12.1998 DE 19856512
(43) Veröffentlichungstag der Anmeldung: 26.09.2001
(73) Patentinhaber: TOGE-Dübel A. Gerhard KG, 90431 Nürnberg (DE)
(72) Erfinder: GERHARD, Anton, D-90427 Nürnberg (DE)
(74) Vertreter: Rau, Albrecht
(86) Internationale Anmeldenummer: EP9909070
(87) Internationale Veröffentlichungsnummer: WO00034671

(56) Entgegenhaltungen:
- WO-A-98/04842
- US-A- 5 827 030

## Beschreibung

Aus der WO 98/04842 ist eine gewindeschneidende Betonschraube bekannt, die einen zylindrischen Kern und ein einstückig mit dem Kern ausgebildetes Gewinde aufweist. Im Bereich des Außenumfangs sind Schneid-Kerben vorgesehen, die durch zum Außenumfang des Gewindes hin offene Dreiecke gebildet sind. Die Flanken des Gewindes verlaufen radial zur Mittel-Längs-Achse im wesentlichen parallel zueinander. Die Schneid-Kerben sind lediglich entlang eines sich vom Einführ-Ende der Schraube entgegen der Einschraub-Längsrichtung erstreckenden Abschnitts vorgesehen. Daran schließt sich ein Gewinde-Abschnitt ohne Schneid-Kerben jedoch mit parallelen Flanken und demselben Gewindedurchmesser an. Die Betonschraube erfordert hohe Eindrehmomente, vor allem zum vollständigen Eindrehen der Betonschraube.

Aus der US 5,827,030 ist eine gattungsgemäße gewindeschneidende Schraube bekannt, die beginnend an ihrer Spitze ein Schneid-Gewinde mit Schneidkerben und ein sich daran anschließendes Normal-Gewinde mit im wesentlichen dreieckigem Querschnitt aufweist. Die Schneidkerben sind als nach außen offene Vertiefungen in dem Schneid-Gewinde ausgebildet, das ebenfalls einen dreieckigen Querschnitt aufweist. Dies bedeutet, daß das Außenquerschnittsprofil des Schneid-Gewindes dem des Normal-Gewindes entspricht. Vor allem bei einem Einschrauben der Schraube in Beton sind beim Eindrehen deshalb sehr hohe Drehmomente erforderlich, die häufig zu einer Zerstörung der Schraube führen.

Der Erfindung liegt die Aufgabe zugrunde, eine Betonschraube der gattungsgemäßen Art dahin weiterzubilden, daß diese ohne Verlust der Belastbarkeit auf Zug einfacher eingeschraubt werden kann.

Die Aufgabe wird durch die kennzeichnenden Merkmale des Anspruchs 1 gelöst. Der Kern der Erfindung besteht darin, ein Schneid-Gewinde vorzusehen, das ein Innengewinde in ein Bohrloch schneidet. An das Schneid-Gewinde schließt sich ein radial zum Außenumfang des Gewindes hin spitz zulaufendes Normal-Gewinde an.

Der Vorteil der Weiterbildung gemäß Anspruch 7 besteht darin, daß der Durchmesser des Normal-Gewindes D_{N} kleiner ist als der Durchmesser des Schneidgewindes D_{S}, so daß beim Eindrehen der Schraube die Reibung des Normalgewindes gegenüber dem Mauerwerk geringer ist als die Reibung des Schneid-Gewindes gegenüber dem Mauerwerk.

Weitere vorteilhafte Weiterbildungen der Erfindung ergeben sich aus den Unteransprüchen.

Weitere Einzelheiten und Vorteile der Erfindung ergeben sich aus der Beschreibung anhand der Zeichnung. Es zeigen:
- Fig. 1: eine Draufsicht auf eine erfindungsgemäße Schraube mit einem Schneid-Gewinde und einem Normal-Gewinde,
- Fig. 2: eine Ansicht gemäß der Schnittlinie II-II in Fig. 1,
- Fig. 3: eine Ansicht gemäß der Schnittlinie III-III in Fig. 1 und
- Fig. 4: eine überlagerte, vergröBerte Darstellung eines Schneid-Gewindes und eines Normal-Gewindes in der Ansicht gemäß Fig. 3.

Eine Schraube 1, insbesondere eine Betonschraube, weist einen im wesentlichen zylindrischen Kern 2 mit einem Einführ-Ende 3, einer Mittel-Längs-Achse 4 und einer Einschraub-Längsrichtung 5 auf. An dem dem Einführ-Ende 3 abgewandten Ende des Kerns 2 ist ein beliebig auszubildender Schraubenkopf 6 vorgesehen. Im Bereich des Einführ-Endes 3 kann der Kern 2 abgefast sein. Es ist auch möglich, den Kern 2 nicht zylindrisch, sondern z. B. konisch zulaufend auszubilden.

Einstückig mit dem Kern 2 ist ein Gewinde 7 ausgebildet, welches vom Einführ-Ende 3 her entgegen der Einschraub-Längsrichtung 5 entlang eines Schneiden-Abschnitts 8 ein Schneid-Gewinde 9 und entlang eines Gewinde-Abschnitts 10 ein sich daran anschließendes Normal-Gewinde 11 aufweist. Die axiale Länge des Schneiden-Abschnitts 8 wird mit L_{S} und die axiale Länge des Gewinde-Abschnitts 10 mit L_{N} bezeichnet.

Das Schneid-Gewinde 9 weist im wesentlichen parallel zueinander verlaufende Schneid-Gewinde-Flanken 12, 13 auf, die jeweils mittels einer Fase 14 bzw. 15 in den Kern 2 übergehen. Das Schneid-Gewinde 9 hat im Bereich seines Außenumfangs einen angenähert reckteckigen Querschnitt. Dies schließt ein, daß die Flanken 12, 13 einen Winkel von 1 ° bis maximal 2 ° einschließen, um ein Herauslösen des Gewindes 9 bei der Herstellung aus dem Herstellungswerkzeug zu ermöglichen. Ein solcher winziger Flankenwinkel hat ausschließlich herstellungstechnische Gründe. Die Höhe des Schneid-Gewindes 9 gegenüber dem Außenumfang des Kerns 2 wird im folgenden mit S bezeichnet. Die von den Fasen 14, 15 mit der Mittel-Längs-Achse 4 eingeschlossenen Winkel werden mit g bezeichnet. Für den Winkel g gilt: 25 ° ≤ g ≤ 75 ° und insbesondere 40 ° ≤ g ≤ 60 °. Das Schneid-Gewinde 9 weist entlang seines Außenumfangs eine Außenfläche 16 auf, die einer Schraubenfläche auf einem Zylinder mit der Mittel-Längs-Achse 4 entspricht. Das Schneid-Gewinde 9 weist entlang seines Außenumfangs radial nach außen hin offene Schneid-Kerben 10 auf, die jeweils die Form eines zum Außenumfang hin offenen Dreiecks haben. Die in Richtung der Einschraub-Drehrichtung 18 voreilenden Kanten 19 zwischen den Außenflächen 16 und den Schneid-Kerben 17 sind Schneid-Kanten 19 und werden im folgenden als solche bezeichnet. Der genaue Aufbau sowie die relative Dimensionierung der Schneid-Kerben 17 zu den übrigen Größenverhältnissen der Schraube 1 sowie zu einem Bohrloch 20, in das die Schraube 1 eingeschraubt wird, ist aus der WO 98/04842 und insbesondere der dort enthaltenen Tabelle bekannt, worauf hiermit verwiesen wird. Die Schneid-Kerben 17 weisen eine radiale Höhe H auf. Für das Verhältnis der Höhen H und S gilt: 0,3 ≤ H/S ≤ 0,7 und insbesondere 0,4 ≤ H/S ≤ 0,5. Das Schneid-Gewinde 9 weist einen Durchmesser D_{S} auf, der um 1,0 bis 2,5 mm größer ist als der Nenndurchmesser des Bohrlochs 20. Der Kern 2 weist einen Durchmesser K auf, der um 0,2 bis 0,8 mm kleiner ist als der Nenndurchmesser des Bohrlochs 20.

Das Normal-Gewinde 11 weist Normal-Gewinde-Flanken 21, 22 auf, die einen Winkel a einschließen, für den gilt: 40 ° ≤ a ≤ 100 ° und insbesondere 50 ° ≤ a ≤ 80°. Ganz besonders bevorzugt ist ein Winkel von a = 60 °. Das Normal-Gewinde 11 weist bei einem Mittel-Längsschnitt einen dreiekkigen Querschnitt auf und läuft somit zum Außenumfang des Normal-Gewindes 11 hin spitz zu. Schneid-Kerben 17 sind nicht vorgesehen. Das Normal-Gewinde 11 besitzt gegenüber dem Außenumfang des Kerns 2 eine Höhe N. Der Durchmesser des Normal-Gewindes 11 wird mit D_{N} bezeichnet.

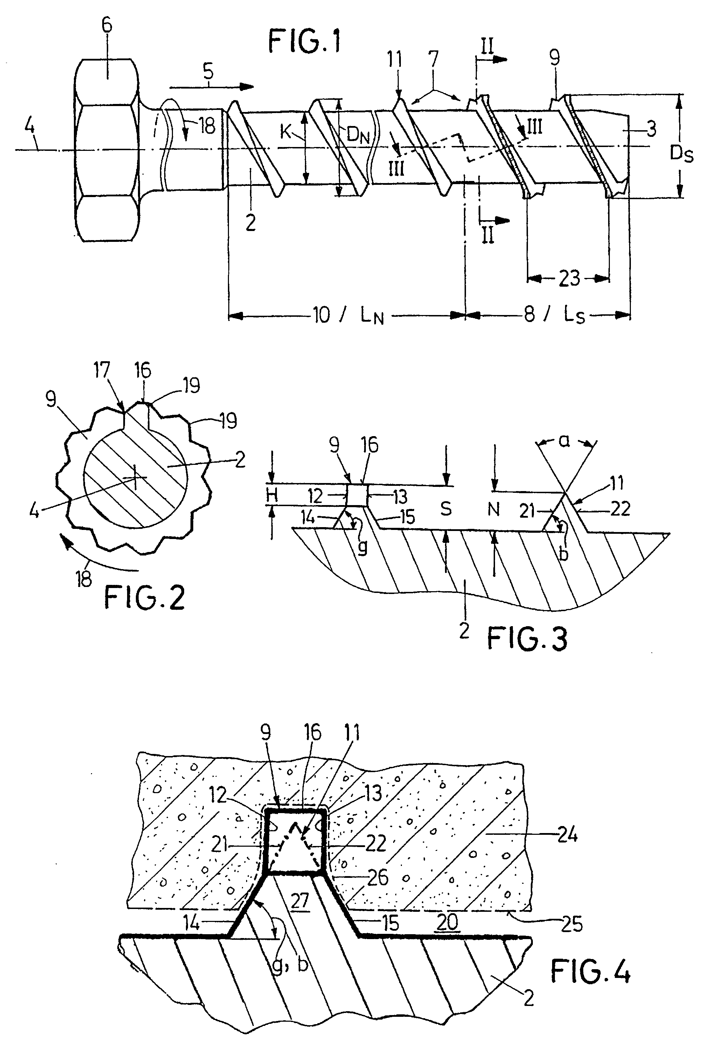

In Fig. 4 ist eine Überlagerung des Schneid-Gewindes 9 und des Normal-Gewindes 11 in der Ansicht gemäß Fig. 3 dargestellt. Die Normal-Gewinde-Flanken 21, 22 sind derart ausgebildet, daß sie mit den Fasen 14 bzw. 15 im Mittel-Längs-Querschnitt zur Deckung bringbar sind. Der von den Normal-Gewinde-Flanken 21, 22 bezüglich der Mittel-Längs-Achse 4 eingeschlossene Winkel b ist somit identisch zu dem Winkel g. Für die Differenz der Höhen S und N gilt: 0,5 mm ≤ S - N ≤ 1 mm und insbesondere 0,2 mm ≤ S - N ≤ 0,5 mm. In den Darstellungen gemäß Fig. 3 und 4 schließen die Schneid-Gewinde-Flanken 12 und 13 jeweils denselben Winkel mit der Mittel-Längs-Achse 4 ein. Dasselbe gilt für die Normal-Gewinde-Flanken 21 und 22. Es ist jedoch auch möglich, eine Anordnung vorzusehen, bei der die eingeschlossenen Winkel verschieden sind. Für das Verhältnis der Längen L_{N} und L_{S} gilt: 1 ≤ L_{N}/L_{S} ≤ 15 und insbesondere 2,5 ≤ L_{N}/L_{S} ≤ 3,5. Die Länge L_{S} ist derart gewählt, daß sich der Schneiden-Abschnitt 8 über ungefähr zwei Gewinde-Gänge 23 erstreckt. Für die Differenz der Durchmesser D_{S} und D_{N} gilt: 0,1 mm < D_{S} - D_{N} ≤ 2 mm und insbesondere 0,4 mm < D_{S} - D_{N} ≤ 1mm. Entlang ungefähr eines Gewindegangs 23 nimmt der Durchmesser des Schneid-Gewindes 9 kontinuierlich zu, bis er den Durchmesser D_{S} erreicht, wobei die Höhe des Schneid-Gewindes 9 am Einführ-Ende 3' gegen Null geht.

Es ist möglich, das Normal-Gewinde 11 als sich entgegen der Einschraub-Längsrichtung 5 verjüngend auszubilden. Die Verjüngung findet dann gegenüber einem maximalen Durchmesser D_{N} des Normal-Gewindes 11 auf 90 % bis 99,9 %, insbesondere 98 % bis 99,5 %, von D_{N} statt.

Beim Eindrehen der Schraube 1 in eine das Bohrloch 20 aufweisende Wand 24 kommen zunächst die Schneid-Kanten 19 des Schneid-Gewindes 9 in Eingriff mit der Bohrlochwand 25. Durch das Schneiden und Reiben des Schneid-Gewindes 9 sowie des bereits gelösten Wandmaterials entsteht ein Innengewinde 26 in der Wand 24. Die Fasen 14 und 15 stellen sicher, daß das Schneid-Gewinde 9 aufgrund der Krafteinwirkung beim Eindrehen vom Kern 2 nicht abgerissen wird. Das Innengewinde 26 folgt nicht präzise der Kontur der Fasen 14, 15 und Flanken 12, 13, sondern es entsteht durch Ausbrechen von Wandmaterial ein kontinuierlicher Übergang im Bereich zwischen Fasen 14, 15 und Flanken 12 bzw. 13, wie dies in Fig. 4 angedeutet ist. Wird die Schraube 1 weiter eingedreht, so kommt das Normal-Gewinde 11 in Kontakt mit dem Innengewinde 26. Der in Fig. 4 strichpunktiert dargestellte Teil des Normal-Gewindes 11 liegt jedoch frei, so daß dieser nicht gegenüber der Bohrloch-Wand 25 reibt. Hierdurch wird zum einen das erforderliche Eindrehmoment reduziert. Zum anderen wird die Reibungskraft gegenüber der Bohrlochwand 25 im Bereich des Sockels 27 des Normal-Gewindes 11 übertragen, so daß die Gefahr eines Abreißens des Normal-Gewindes 11 vom Kern 2 nicht besteht. Dasselbe gilt für die Aufnahme und Weiterleitung von Kräften, wenn die Schraube 1 auf Zug entgegen der Einschraub-Längsrichtung 5 belastet wird. Der Bereich des Sockels 27 wird durch die Schneid-Kerben 17 entlang des ersten Gewindegangs 23 vom Einführ-Ende 3 her freigeschnitten, entlang dessen der Durchmesser des Schneid-Gewindes 9 kontinuierlich zunimmt.

## Patentansprüche

1. Schraube (1), insbesondere Betonschraube, zum Einschrauben in eine Bohrloch-Wand (25) eines Bohrlochs (20)
a) mit einem Kern (2) mit einem Einführ-Ende (3), einer Einschraub-Längsrichtung (5) und einer Mittel-Längs-Achse (4) und
b) mit einem einstückig mit dem Kern (2) ausgebildeten Gewinde (7), welches aufweist
i) ein sich vom Einführ-Ende (3) entgegen der Einschraub-Längsrichtung (5) erstreckendes Schneid-Gewinde (9) mit radial nach außen hin offenen Schneid-Kerben (17) und
ii) ein sich an das Schneid-Gewinde (9) anschließendes Normal-Gewinde (11), das im wesentlichen einen dreieckigen Querschnitt aufweist, **dadurch gekennzeichnet, daß**
c) das Schneid-Gewinde (9) im wesentlichen zueinander parallel verlaufende Schneid-Gewinde-Flanken (12,13) aufweist.

2. Schraube (1) ,gemäß Anspruch 1, **dadurch gekennzeichnet, daß** das Normal-Gewinde (11) Normal-Gewinde-Flanken (21, 22) aufweist, die miteinander einen Winkel a einschließen für den gilt: 40 ° ≤ a ≤ 100 °, vorzugsweise 50 ° ≤ a ≤ 80 ° und ganz besonders bevorzugt etwa 60 °.

3. Schraube (1) gemäß Anspruch 1 oder 2, **dadurch gekennzeichnet, daß** jede Schneid-Gewinde-Flanke (12, 13) mittels einer Fase (14, 15) in den Kern (2) übergeht.

4. Schraube (1) gemäß Anspruch 3, **dadurch gekennzeichnet, daß** für den zwischen der Mittel-Längs-Achse (4) und der Fase (14, 15) eingeschlossenen Winkel g gilt: 25 ° ≤ g ≤ 75 ° und insbesondere 40° ≤ g ≤ 60°.

5. Schraube (1) gemäß einem der vorangehenden Ansprüche, **dadurch gekennzeichnet, daß** der Kern (2) im wesentlichen zylindrisch ausgebildet ist und das Schneid-Gewinde (9) gegenüber dem Außenumfang des Kerns (2) eine Höhe S und das Normal-Gewinde (11) gegenüber dem Außenumfang des Kerns (2) eine Höhe N aufweisen, wobei gilt: S>N.

6. Schraube (1) gemäß Anspruch 5, **dadurch gekennzeichnet, daß** für die Differenz der Höhen S und N gilt: 0,05 mm ≤ S - N ≤ 1 mm und insbesondere 0,2 mm ≤ S - N ≤ 0,5 mm.

7. Schraube (1) gemäß einem der Ansprüche 1 bis 4, **dadurch gekennzeichnet, daß** das Schneid-Gewinde (9) einen Außendurchmesser D_{S} und das Normal-Gewinde (11) einen Außendurchmesser D_{N} aufweisen, für die gilt: D_{S} > D_{N} und insbesondere 0,1 mm ≤ D_{S} - D_{N} ≤ 2 mm.

8. Schraube (1) gemäß einem der Ansprüche 5 bis 7, **dadurch gekennzeichnet, daß** die Schneid-Kerben (17) eine radiale Höhe H aufweisen, wobei für das Verhältnis der Höhen H und S gilt: 0,3 ≤ H/S ≤ 0,7 und insbesondere 0,4 ≤ H/S ≤ 0,5.

9. Schraube (1) gemäß einem der vorgehenden Ansprüche, **dadurch gekennzeichnet, daß** der Außendurchmesser D_{S} um 1,0 bis 2,5 mm größer ist als der Nenndurchmesser des Bohrlochs (20).

10. Schraube (1) gemäß einem der vorangehenden Ansprüche, **dadurch gekennzeichnet, daß** der Kern (2) einen Durchmesser K aufweist, der um 0,2 bis 0,8 mm kleiner ist als der Nenndurchmesser des Bohrlochs (20).

11. Schraube (1) gemäß einem der vorangehenden Ansprüche, **dadurch gekennzeichnet, daß** das Normal-Gewinde (11) einen maximalen Durchmesser D_{N} aufweist, wobei sich der Durchmesser des Normal-Gewindes (11) entgegen der Einschraub-Längsrichtung (5) auf 90 % bis 99,9 %, insbesondere 98 % bis 99,5 %, von D_{N} verjüngt.

12. Schraube (1) gemäß Anspruch 3, **dadurch gekennzeichnet, daß** der Querschnitt der Fasen (14, 15) teilweise zur Deckung bringbar ist mit dem Querschnitt der Normal-Gewinde-Flanken (21, 22).

## Claims

1. A screw (1), in particular a concrete screw, for being screwed into a wall (25) of a drilled hole (20), comprising
a) a core (2), which has a pilot end (3), a lengthwise screw-in direction (5) and a central longitudinal axis (4); and
b) a thread (7), which forms a single piece with the core (2) and which comprises
i) a cutting thread (9), which extends from the pilot end (3) counter to the lengthwise screw-in direction (5), having cutting notches (17), which are open radially outwards and
ii) a standard thread (11), which adjoins the cutting thread (9) and which substantially has a triangular cross-sectional shape,
**characterized in that**
c) the cutting thread (9) has flanks (12, 13), which are substantially parallel to each other.

2. A screw (1) according to claim 1, **characterized in that** the standard thread (11) has flanks (21, 22), which corner by an angle a to which applies: 40° ≤ a ≤ 100°, preferably 50° ≤ a ≤ 80° and approximately 60° by special preference.

3. A screw (1) according to claim 1 or 2, **characterized in that** each flank (12, 13) of the cutting thread (9) passes into the core (2) by means of a bevel (14, 15).

4. A screw (1) according to claim 3, **characterized in that** 25° ≤ g ≤ 75°, and in particular 40° ≤ g ≤ 60°, applies to the angle g made by the central longitudinal axis (4) and the bevel (14, 15).

5. A screw (1) according to one of the preceding claims, **characterized in that** the core (2) is substantially cylindrical and **in that** the cutting thread (9) has a height S as compared to the outer circumference of the core (2) and the standard thread (11) has a height N as compared to the outer circumference of the core (2), with S > N applying.

6. A screw (1) according to claim 5, **characterized in that**
0.05 mm ≤ S - N ≤ 1 mm, and in particular 0.2 mm ≤ S - N ≤ 0.5 mm, applies to the difference of the heights S and N.

7. A screw (1) according to one of claims 1 to 4, **characterized in that** the cutting thread (9) has an outside diameter D_{S} and the standard thread (11) has an outside diameter D_{N}, to which applies: D_{S} > D_{N}, and in particular 0.1 mm ≤ D_{S} - D_{N} ≤ 2 mm.

8. A screw (1) according to one of claims 5 to 7, **characterized in that** the cutting notches (17) have a radial height H, with 0.3 ≤ H/S ≤ 0.7 applying to the height H and S ratio, and in particular 0.4 ≤ H/S ≤ 0.5.

9. A screw (1) according to one of the preceding claims, **characterized in that** the outside diameter D_{S} exceeds the nominal diameter of the drilled hole (20) by 1.0 to 2.5 mm.

10. A screw (1) according to one of the preceding claims, **characterized in that** the core (2) has a diameter K, which is by 0.2 to 0.8 mm less than the nominal diameter of the drilled hole (20).

11. A screw (1) according to one of the preceding claims, **characterized in that** the standard thread (11) has a maximal diameter D_{N}, with the diameter of the standard thread (11) tapering towards 90 % to 99.9 %, in particular 98 % to 99.5 %, of D_{N} counter to the lengthwise screw-in direction (5).

12. A screw (1) according to claim 3, **characterized in that** the cross section of the bevels (14, 15) is partially congruent with the cross section of the flanks (21, 22) of the standard thread (11).

## Revendications

1. Vis (1), notamment vis à béton conçue pour être vissée dans une paroi (25) d'un trou foré (20),
a) comprenant un noyau (2) présentant une extrémité d'introduction (3), une direction longitudinale (5) de pénétration par vissage et un axe médian longitudinal (4), et
b) un filetage (7) taillé d'un seul tenant avec le noyau (2) et présentant
i) un filet sectionneur (9) qui s'étend depuis l'extrémité d'introduction (3), en sens inverse de la direction longitudinale (5) de pénétration par vissage, et est muni d'encoches sectionneuses (17) ouvertes radialement vers l'extérieur, et
ii) un filet normal (11) qui se rattache audit filet sectionneur (9) et possède, pour l'essentiel, une section transversale triangulaire,
**caractérisée par le fait que**
c) le filet sectionneur (9) présente des flancs (12, 13) s'étendant pour l'essentiel parallèlement l'un à l'autre.

2. Vis (1) selon la revendication 1, **caractérisée par le fait que** le filet normal (11) présente des flancs (21, 22) décrivant mutuellement un angle a obéissant à la relation 40° ≤ a ≤ 100°, de préférence 50° ≤ a ≤ 80°, et mesurant environ 60° de façon tout particulièrement préférentielle.

3. Vis (1) selon la revendication 1 ou 2, **caractérisée par le fait que** chaque flanc (12, 13) du filet sectionneur fusionne dans le noyau (2) au moyen d'un biseau (14, 15).

4. Vis (1) selon la revendication 3, **caractérisée par le fait que** l'angle g, formé entre l'axe médian longitudinal (4) et le biseau (14, 15), obéit à la relation 25° ≤ g ≤ 75° et, en particulier, à 40° ≤ g ≤ 60°.

5. Vis (1) selon l'une des revendications précédentes, **caractérisée par le fait que** le noyau (2) est de réalisation sensiblement cylindrique, le filet sectionneur (9) possède une hauteur S vis-à-vis du périmètre extérieur dudit noyau (2), et le filet normal (11) possède une hauteur N vis-à-vis dudit périmètre extérieur du noyau (2), sachant que S > N.

6. Vis (1) selon la revendication 5, **caractérisée par le fait que** la différence, entre les hauteurs S et N, obéit à la relation 0,05 mm ≤ S - N ≤ 1 mm et, en particulier, à 0,2 mm ≤ S - N ≤ 0,5 mm.

7. Vis (1) selon l'une des revendications 1 à 4, **caractérisée par le fait que** le filet sectionneur (9) présente un diamètre extérieur D_{S} et le filet normal (11) présente un diamètre extérieur D_{N}, lesdits diamètres obéissant à la relation D_{S} > D_{N} et, en particulier, à 0,1 mm ≤ D_{S} - D_{N} ≤ 2 mm.

8. Vis (1) selon l'une des revendications 5 à 7, **caractérisée par le fait que** les encoches sectionneuses (17) présentent une hauteur radiale H, le rapport entre les hauteurs H et S obéissant à la relation 0,3 ≤ H/S ≤ 0,7 et, en particulier, à 0,4 ≤ H/S ≤ 0,5.

9. Vis (1) selon l'une des revendications précédentes, **caractérisée par le fait que** le diamètre extérieur D_{S} est supérieur, de 1,0 à 2,5 mm, au diamètre nominal du trou foré (20).

10. Vis (1) selon l'une des revendications précédentes, **caractérisée par le fait que** le noyau (2) présente un diamètre K inférieur, de 0,2 à 0,8 mm, au diamètre nominal du trou foré (20).

11. Vis (1) selon l'une des revendications précédentes, **caractérisée par le fait que** le filet normal (11) présente un diamètre maximal D_{N}, le diamètre dudit filet normal (11) se rétrécissant, en sens inverse de la direction longitudinale (5) de pénétration par vissage, à une valeur comprise entre 90 % et 99,9 %, notamment entre 98 % et 99,5 % de D_{N}.

12. Vis (1) selon la revendication 3, **caractérisée par le fait que** la section transversale des biseaux (14, 15) peut être mise partiellement en coïncidence avec la section transversale des flancs (21, 22) du filet normal.
